# EUROPÄISCHE PATENTSCHRIFT

(11) **EP 1 209 688 B1**
(45) Veröffentlichungstag und Bekanntmachung des Hinweises auf die Patenterteilung: **02.01.2008**
(21) Anmeldenummer: 00125679.1
(22) Anmeldetag: 23.11.2000
(51) Int. Cl.: G11C 16/10

(54) **Verfahren und Vorrichtung zur Aktualisierung von Lesedateien in einem FLASH-Speicher einer industriellen Steuereinrichtung**
Method and apparatus to update data in a FLASH-memory of an industrial controller
Méthode et dispositif pour la mise-à-jour de données dans une mémoire flash d'un contrôleur industriel

(43) Veröffentlichungstag der Anmeldung: 29.05.2002
(73) Patentinhaber: SIEMENS AKTIENGESELLSCHAFT, 80333 München (DE)
(72) Erfinder: Däumler, Gerald, 90613 Grosshabersdorf (DE); Köbler, Stefan, 90513 Zirndorf (DE); Pörschmann, Gernot, 91052 Erlangen (DE)

(56) Entgegenhaltungen:
- EP-A- 0 489 204
- EP-A- 0 887 729
- WO-A-99/54816
- DE-A- 19 525 100

## Beschreibung

Die Erfindung bezieht sich auf Verfahren zur Aktualisierung von Lesedateien, die mindestens in einem Speicherbereich eines ersten Speichers abgelegt sind. Sie bezieht sich weiterhin auf eine industrielle Steuereinrichtung mit Mitteln zur Durchführung der o.g. Verfahren.

Industrielle Steuereinrichtungen sind Mikrocomputer-Systeme, die für den Einsatz im industriellen Bereich, z.B. in der Automatisierung oder in der Fertigung, ertüchtigt sind. Sie verfügen in kompakter Weise über die notwendige Hardware zur Steuerung und Regelung von daran angeschlossenen weiteren Komponenten. Ein- und Ausgabegeräte für Personen, wie z.B. Monitor oder Tastatur, werden auf ein Minimum reduziert, da solche Steuereinrichtungen im wesentlichen im automatischen Betrieb arbeiten. Derartige Steuereinrichtungen werden auch als "Embedded-Systeme" bezeichnet. Darüber hinaus können diese Systeme über ein Netzwerk z.B. über den Profibus oder über ein LAN verbunden sein, zentral gesteuert oder überwacht werden.

Aus Kostengründen werden in modernen Embedded-Systeme der Applikationscode sowie die nachzuladende Daten wie z.B. Prozessdaten als Lesedateien in FLASH-EPROM-Speicherbausteine oder auch FEPROM-Speicherbausteine als ein Beispiel für einen nichtflüchtigen Speicher gespeichert. Im folgenden werden diese Bausteine als FLASH-Speicher bezeichnet. Diese Speicherbausteine sind elektrisch lösch- und beschreibbar. Im Vergleich zu anderen Speichermedien wie Festplatten oder Diskettenlaufwerke sind diese unempfindlich und kostengünstig. So ist es möglich, dass z.B. ein aktualisierter Applikationscode über einen Nachladevorgang in den FLASH-Speicher übertragen werden kann. Dabei ist kein physikalischer Tausch der Bausteine notwendig. Zum Beschreiben der FLASH-Speicher ist es notwendig, dass diese zuvor in einem speziellen Löschvorgang zumindest teilweise gelöscht werden. Dabei besitzen FLASH-Speicher üblicherweise eine Anzahl von einzeln löschbaren Segmenten, die einer mit der Basis 2 potenzierten Zahl entspricht. Das Beschreiben des FLASH-Speichers erfolgt dann mit einem speziellen FLASH-Schreibprogramm. Dieses Programm trägt auch der technischen Besonderheit der FLASH-Speicher Rechnung, dass während eines Schreibvorgangs kein Lesezugriff auf den FLASH-Speicher erfolgen darf. Der zu schreibende Applikationscode und das FLASH-Schreibprogramm befinden sich daher im RAM des Embedded-Systems. Der Schreibvorgang kann dabei in Abhängigkeit von der zu schreibenden Datenmenge im Bereich von wenigen Minuten bis zu einer Stunde dauern. Neuere FLASH-Speicher gestatten zwischenzeitlich auch Lesezugriffe während des Schreibvorgangs. Deren Einsatz in Embedded-Systemen hängt dabei entscheidend von den Mehrkosten gegenüber konventionellen FLASH-Speicher ab. Weiterhin, aber zu sehr hohen Kosten, sind sogenannte FRAM-Speicherbausteine erhältlich, die erheblich schneller als FLASH-Speicher beschrieben werden können. Darüber hinaus entfällt bei diesen Speicherbausteinen der spezielle Löschvorgang.

Häufiger werden im FLASH-Speicher zu ändernde Datenblöcke wie z.B. Daten der Applikationen in festen Speicherblöcken angelegt, deren Speichergröße üblicherweise einem Vielfachen eines einzeln löschbaren Segments entspricht. Die Adressen dieser Speicherblöcke müssen dabei der jeweiligen auf dem Embedded-System ausgeführten Applikation bekannt sein, um auf diese Daten zugreifen zu können. Bei Aktualisierung werden die zu ändernden Speicherblöcke durch neue ersetzt bzw. überschrieben. Um zukünftige mögliche Erweiterungen zu berücksichtigen, werden üblicherweise Speicherblöcke für Daten und Applikation reserviert. Die Adressen dieser reservierten Speicherblöcke müssen den Applikationen bei Belegung gleichfalls bekannt sein.

Nachteilig daran ist, dass z.B. bei der Programmierung der Applikation auf einem Entwicklungsrechner immer der Adressbereich der Speicherblöcke für Daten, auf die später zugegriffen werden muss, programmtechnisch berücksichtigt werden muss.

Weiterhin tritt das Problem auf, wenn notwendige neue Datenblöcke, z.B. Daten für eine neue Sprache oder eine neue Ausgabemaske, einen größeren Speicherbereich erfordern. Dies ist dann der Fall, wenn der Speicherbedarf größer als die Summe des jeweiligen Datenbereichs und des dazugehörigen reservierten Bereichs ist. In einem solchen Fall ist auf dem Entwicklungsrechner die gesamte Aufteilung der Speicherblöcke zu überarbeiten, wenn nicht auf andere reservierte Speicherbereiche zugegriffen werden soll. Dazu ist es u.U. notwendig, für alle Applikationen die Adressbereiche der Speicherblöcke zu ändern. Entsprechend hoch ist der Aufwand, die Applikationen nochmals zu kompilieren und einen entsprechend ladbaren Objektcode zu erzeugen. Aufgrund der manuellen Änderungen der Speicherblöcke ist dieses Verfahren fehlerträchtig. U.U. sind für eine ordnungsgemäße Änderung mehrere Kompilier- und Verifikationszyklen notwendig. Dieses Verfahren ist dann besonders nachteilig, wenn unter terminlichem Druck dringend notwendige oder gewünschte Änderungen seitens des Kunden eingebracht werden müssen. Häufig ist ein abschließender Test der geänderten Applikationssoftware z.B. nur bei der Anlage eines Kunden unter reellen Bedingungen möglich. Dabei ist es aus Sicht des Kunden zwingend erforderlich, dass der Gesamtbetrieb der Anlage so wenig und so kurz wie möglich beeinträchtigt wird.

Weiterhin nachteilig ist, dass durch die sequentielle Ablage von Speicherblöcken der jeweiligen Applikationen und Daten keine Strukturierung in z.B. Funktions-, Sprachen-, Treiber-oder Aufgabengruppen möglich ist. Dies würde auch bedingen, dass die Datenblöcke eine gewisse Mindeststrukturierung in Form einer Datei bzw. einer Lesedatei für einen vorwiegenden Lesezugriff aufweisen müssten.

Aus EP 0 887 729 A2 ist ein Verfahren bekannt, bei dem Software in einem in mehrere Speicherbänke unterteilten Speicher bei einem Update der Software Speicherbank für Speicherbank erneuert wird. Hierzu wird in einer Ausführungsform neue Software für eine Speicherbank in einen Download-Speicher geladen und von dort die betreffende Speicherbank ohne Fehlerüberprüfung und Defragmentation überschrieben. In einer anderen Ausführungsform werden einzelne Softwaremodule, die in Gruppen in den verschiedenen Speicherbänken gespeichert sind, einer oder mehrerer zu aktualisierenden Speicherbänke in den Download-Speicher geladen und danach eine Kopie der ersten der möglicherweise mehreren zu aktualisierenden Speicherbänke in einen weiteren Speicher geladen. Danach wird das betreffende alte Softwaremodul im weiteren Speicher mit dem aktuellen überschrieben und schließlich der nun aktuelle Inhalt aus dem weiteren Speicher in die zu aktualisierende Speicherbank kopiert. Das beschriebene Verfahren benötigt also entweder einen zusätzlichen Speicher oder verzichtet auf eine Fehlerüberprüfung.

Der Erfindung liegt die Aufgabe zugrunde, Verfahren zur Aktualisierung von Lesedateien anzugeben, die automatisch eine sichere, richtigbezogene und strukturierte Ablage von Lesedateien in einem Speicher ermöglichen, wobei keine speziell reservierten Speicherblöcke mehr notwendig sind.

Der Erfindung liegt die weitere Aufgabe zugrunde, eine Vorrichtung zur Aktualisierung von Lesedateien in industriellen Steuereinheiten anzugeben.

Die Aufgaben werden gelöst mit den in den Ansprüchen angegebenen Verfahren und einer Steuereinrichtung. Vorteilhafte Ausgestaltungen der Verfahren und der Steuereinrichtung sind in den Unteransprüchen enthalten.

Die Erfindung wird an Hand der nachfolgenden Figuren näher erläutert. Dabei zeigt
- FIG 1: einen beispielhaften Aufbau einer industriellen Steuereinrichtung,
- FIG 2: ein Beispiel für eine bisherige Aufteilung des Speicherbereichs eines Speicherbausteins in Speicherblöcke,
- FIG 3A-E: ein Beispiel für einen bisherigen Aktualisierungsvorgang,
- FIG 4: ein Beispiel für die erfindungsgemäße Aufteilung des Speicherbereichs eines Speicherbausteins, und
- FIG 5A-E: ein Beispiel für einen Aktualisierungsvorgang gemäß der Erfindung.

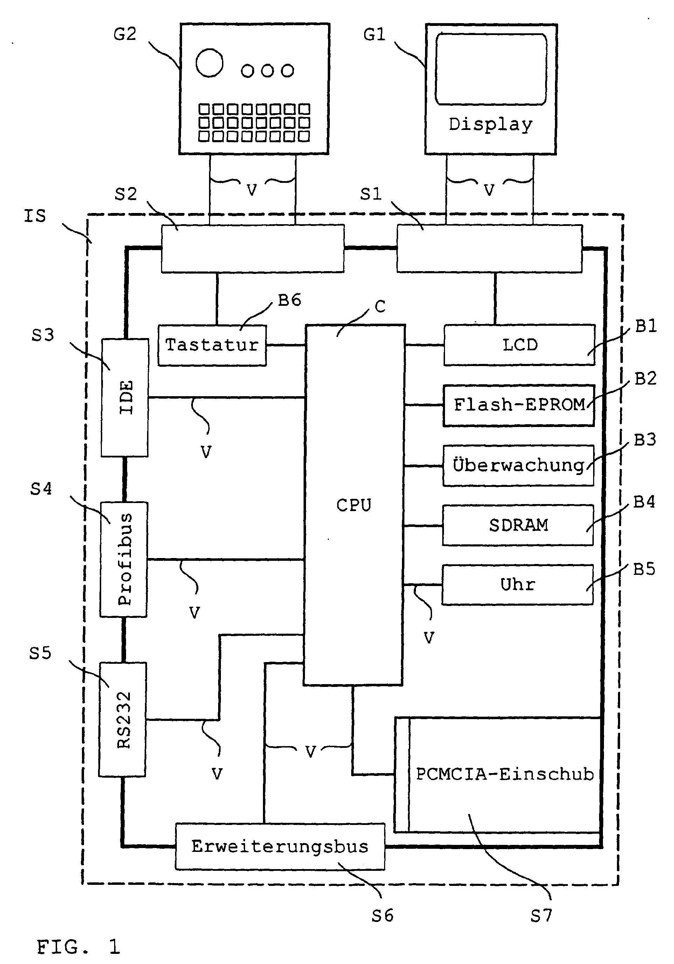

FIG 1 zeigt einen beispielhaften Aufbau einer industriellen Steuereinrichtung IS in gestrichelter Umrandung. Dabei ist in der Mitte der Steuereinrichtung IS eine Datenverarbeitungsein heit C, z.B. ein Mikrocontroller oder eine CPU, ersichtlich. Diese ist über Verbindungsleitungen V mit einer Reihe von Funktionsbausteinen B1-6 sowie mit Schnittstellen S1-S7 verbunden. Der mit B1 bezeichnete Funktionsbaustein dient in dem Beispiel der FIG 1 als Treiber für die Anzeige einer LCD-Anzeige. Der FLASH-Speicher B2 kann, wie eingangs beschrieben, als Speicher zur Ablage von Applikationen oder Daten fungieren. Der weitere Überwachungsbaustein B3 kann beispielsweise das ordnungsgemäße Ablaufen der internen Prozesse der industriellen Steuereinrichtung IS überwachen und ggf. eine Fehlermeldung generieren. Der flüchtige RAM-Speicher B4 kann als Arbeitsspeicher zur Verarbeitung der ein- und ausgehenden Daten dienen. Häufig werden für diese Zwecke kostengünstige SDRAM-Bausteine B4 eingesetzt. Weiterhin kann sich auf einer industriellen Steuereinrichtung IS eine Echtzeituhr B5 befinden, die z.B. zur Protokollierung von Prozessdaten oder von Fehlern mit einer entsprechenden Zeitangabe dient. Zur Ansteuerung einer externen Tastatur oder von wenigen notwendigen Tasten ist ein Tastaturtreiberbaustein B6 zur Entlastung der Datenverarbeitungseinheit C im Beispiel der FIG 1 vorhanden.

Weiterhin verfügt die beispielhafte industrielle Steuereinrichtung IS über eine Reihe von Schnittstellen S1-7 zur Kommunikation mit externen Geräten oder auch Bussystemen. Dabei dient in diesem Beispiel die Schnittstelle S1 zum Anschluss eines Displays G1 zur Ausgabe von aktuellen Prozessdaten. An die Schnittstelle S2 kann ein Eingabegerät G2 wie z.B. eine Tastatur angeschlossen werden, über welche z.B. Befehle an die Datenverarbeitungseinheit C übermittelt werden können. S3 bis S5 dienen zur Verbindung der industriellen Steuereinrichtung IS mit Standard-Bussystemen. An die IDE-Schnittstelle S3 können ergänzende Hardwarekomponenten z.B. eine Festplatte anschlossen werden. Die Schnittstelle S4 bietet die Möglichkeit zum Anschluss der industriellen Steuereinrichtung IS an den in der Automatisierungsindustrie häufig eingesetzten Profibus. Über die RS232-Schnittstelle S5 kann z.B. ein Notebook angeschlossen werden, über welchen im Rahmen von Wartungsarbeiten Daten wie z.B. neue Lesedateien D von oder zu der industriellen Steuereinrichtung IS übertragen werden können. Zur Verbindung von gleichartigen industriellen Steuereinrichtungen IS untereinander oder von spezieller Ergänzungshardware ist der Erweiterungsbus S6 vorgesehen. Als Schnittstelle S7 ist weiterhin ein PCMCIA-Einschub dargestellt, in welchen PCMCIA-Karten eingesteckt werden können. Karten dieser Art können z.B. externen Speicher beinhalten, auf welchen die Datenverarbeitungseinheit C sehr schnell zugreifen kann. Diese Karten können auch spezielle Kommunikationshardware zum Anschluss an ein Netzwerk z.B. ein LAN oder z.B. ein Modem zum Anschluss an eine Telefonleitung enthalten.

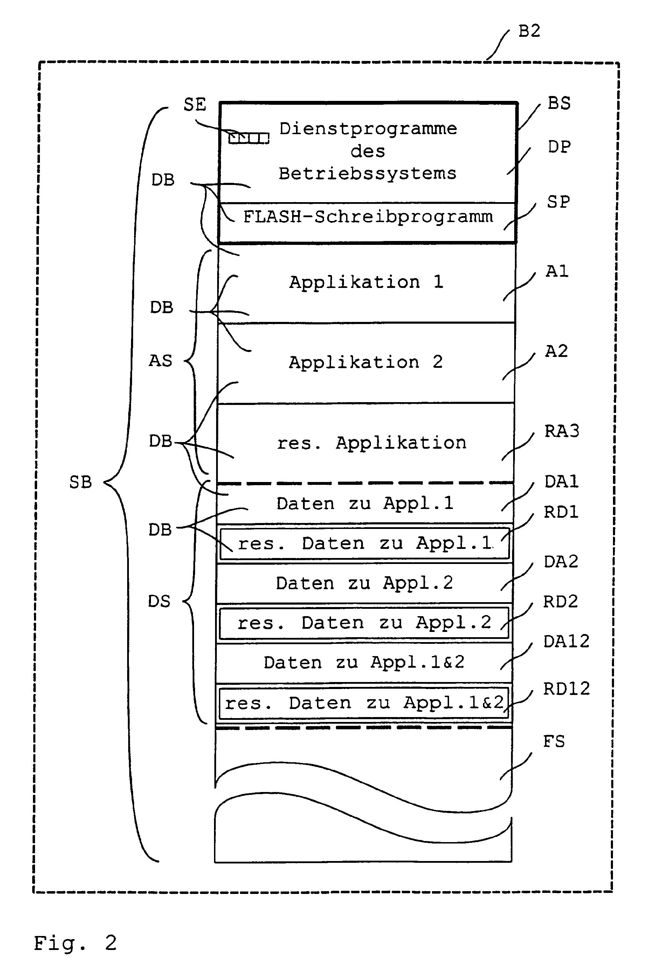

FIG 2 zeigt ein Beispiel für die Aufteilung des Speicherbereichs SB eines Speichers B2 in Speicherblöcke BL. Dabei zeigt das Beispiel in Figur 2 die grobe Einteilung des Gesamtspeicherbereichs SB in die drei Speicherbereiche Betriebssystem BS, Applikationsspeicher AS sowie Datenspeicher DS. Darüber hinaus kann noch ein nicht genutzter freier Speicherbereich FS vorhanden sein. Das Betriebssystem BS enthält in diesem Beispiel Dienstprogramme DP z.B. zur Ein- und Ausgabe von Daten. Weiterhin enthält dieses das schon eingangs beschriebenen spezielle notwendige FLASH-Schreibprogramm SP für die FLASH-Speicher B4. Im Applikationsspeicher AS sind die jeweiligen Applikationen A1,A2 sowie ein folgender reservierter Speicherblock BL für eine ggf. zukünftige Applikation RA3 hintereinander abgelegt. Im folgenden Datenspeicher DS sind die zu den jeweiligen Applikationen A1,A2 gehörigen Datenblöcke DA1,DA2,DA12 sowie reservierte Datenblöcke RD1,RD2,RD12 als Puffer für Erweiterungen beispielhaft angeordnet. Auf den Datenspeicherblock DA12, der z.B. die Ausgabemaske in einer möglichen Fremdsprache enthält, greifen hierbei sowohl die Applikation A1 als auch die Applikation A2 im Beispiel der FIG 1 zu.

Im normalen Betrieb der industriellen Steuereinrichtung IS wird auf die o.g. Speicherblöcke BL, insbesondere auf die Speicherblöcke BL der Applikationen A1,A2 und der Daten DA1,DA2,DA12, nur lesend zugegriffen. Da diese im Rahmen einer Erweiterung der Applikationssoftware oder einer Programmverbesserung aktualisiert werden können, werden diese im folgenden auch als Lesedateien D bezeichnet.

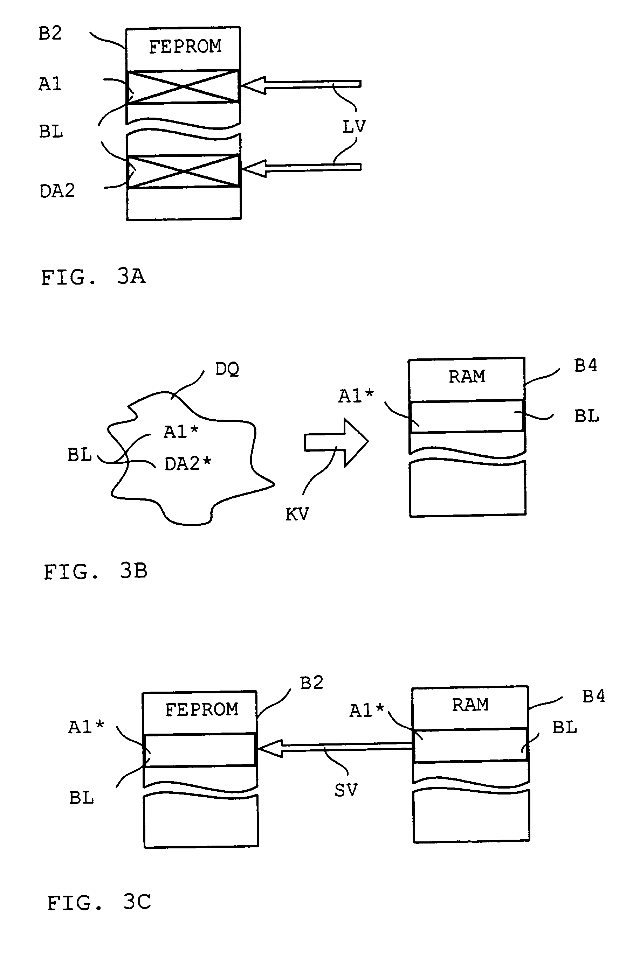

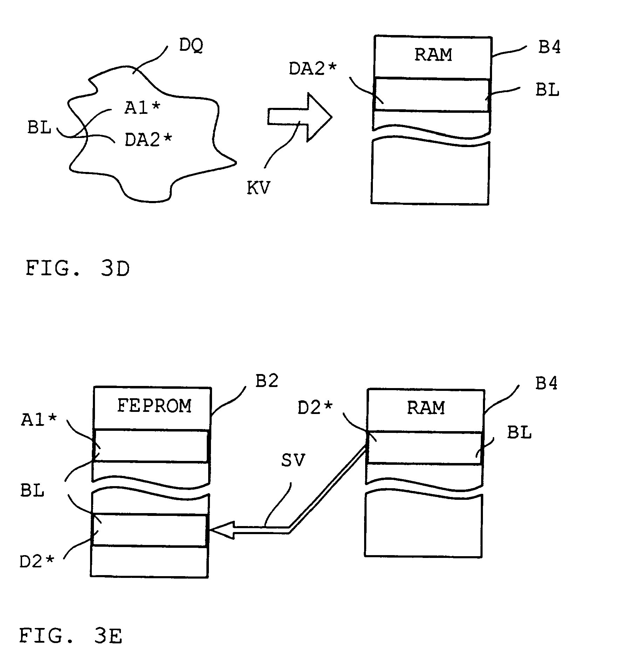

FIG 3A-E zeigt ein Beispiel für einen bisherigen Aktualisierungsvorgang. Dabei werden in FIG 3A zuerst die ursprünglichen Speicherblöcke BL der Applikation A1 und des Datenblocks DA2 durch einen speziellen Löschvorgang LV im beispielhaften FLASH-Speicher B2 gelöscht. Wie eingangs erläutert, kann auf diesen Löschvorgang LV bei Verwendung von FRAM-Bausteinen verzichtet werden.

In FIG 3B ist eine Datenquelle DQ sowie ein RAM-Baustein B4 als Arbeitsspeicher dargestellt. Aus der Datenquelle DQ wird durch einen Kopiervorgang KV eine erste neue Applikation A1* als Datenblock BL in den Arbeitsspeicher übertragen. Die Datenquelle DQ kann gemäß dem Beispiel der FIG 1 ein Netzwerk sein, das beispielsweise mittels des IDE-, RS232-Bus oder LAN S3,S4 an die industrielle Steuereinrichtung angeschlossen ist. Die Datenblöcke BL können als ein weiteres Beispiel auch auf einer in den PCMCIA-Einschub S7 eingesteckten PCMCIA-Karte gespeichert sein.

In einem dritten Schritt wird gemäß dem Beispiel in FIG 3C der Speicherblock BL der Applikation A1* in den entsprechend freigewordenen Speicherblock BL durch einen Schreibvorgang SV in den FLASH-Speicher B2 übertragen. Dieser Schreibvorgang kann z.B. durch ein spezielles notwendiges FLASH-Schreibprogramm SP erfolgen.

Im vierten und fünften Schritt erfolgt für einen zweiten neuen Datenspeicherblock DA2* der gleiche Ablauf wie in FIG 3B und 3C. Durch dieses Verfahren können sukzessive neue Datenblöcke BL aus der Datenquelle DQ in den Arbeitsspeicher B4 und dann in den korrespondierenden Speicherblock BL im FLASH-Speicher B2 kopiert werden.

Die Anwendung dieses Verfahrens für eine Aktualisierung von Applikationen und deren Daten ist möglich, solange die neuen Datenblöcke BL zur Überschreibung oder zur Erweiterung benachbarte Speicherblöcke BL nicht tangieren. Dies ist dann der Fall, wenn gemäß dem Beispiel in FIG 2 ein neuer Datenblock DA2* einen höheren Speicherbedarf aufweist, als durch den Datenblock DA2 und den für Erweiterungen reservierten Speicherblock RD2 bereitgestellt werden kann. In diesem Fall würden Teile des nachfolgenden Datenblocks DA12 überschrieben werden. Die Applikation A1 und A2 würden in diesem Fall bei einem Datenzugriff falsche Daten vorfinden. Im ungünstigsten Fall kann sich die industrielle Steuereinrichtung IS fehlerhaft verhalten und entsprechende Schäden bei hohen Ausfallzeiten z.B. in einer Fertigungsstraße bewirken.

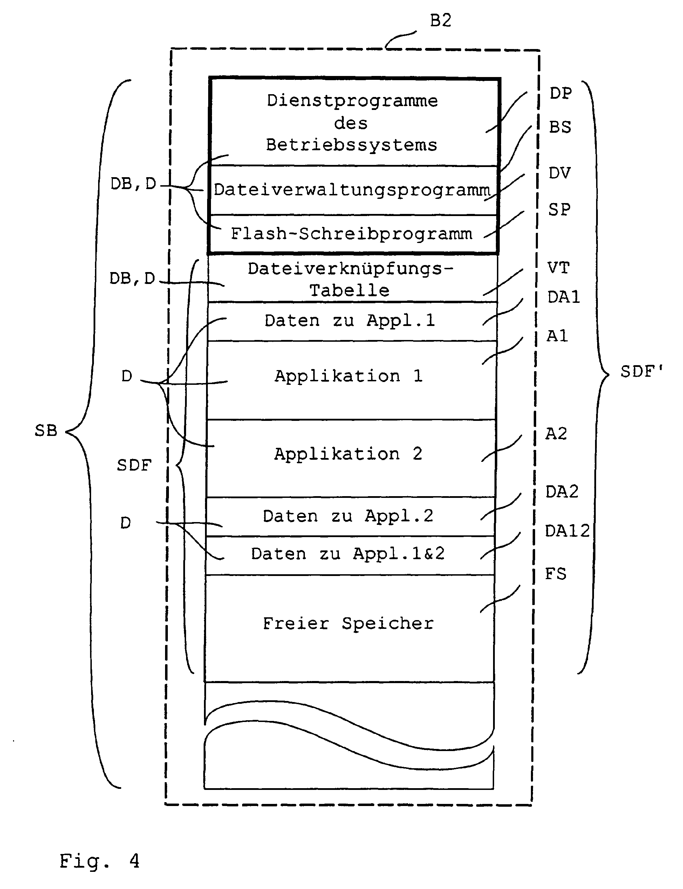

FIG 4 zeigt ein Beispiel für die erfindungsgemäße Aufteilung des Speicherbereichs SB eines beispielhaften FLASH-Speichers B2. Dabei bezeichnet SDF bzw. SDF' einen Bereich zur Ablage von Lesedateien D innerhalb des Speicherbereichs SB. Generell ist es möglich, mehrere solcher Speicherbereiche SDF bzw. SDF' innerhalb des Speicherbereichs SB des Speichers B2 anzulegen. Die beispielhaften Speicherbereiche SDF bzw. SDF' unterscheiden sich voneinander dadurch, dass diese im ersten Fall insbesondere die Lesedateien D wie Applikationen A1,A2 und Datenblöcke DA1,DA2,DA12 und einer optionalen Dateiverknüpfungs-Tabelle VT umfasst. Im zweiten Fall schließt der strukturierte Speicherbereich SDF' auch das Betriebssystem BS mit ein. Die Verwendung des letztgenannten Speicherbereichs SDF' kann dann vorteilhaft sein, wenn auch Änderungen an Dienstprogrammen DP des Betriebssystems BS absehbar sind.

Wie im Beispiel der FIG 4 ersichtlich ist, sind die Speicherblöcke BS der Applikationen A1,A2 und der Daten DA1,DA2,DA12 in beliebiger Reihenfolge angeordnet. Weiterhin wurden die ursprünglichen reservierten Speicherblöcke BL der jeweiligen Applikationen A1,A2 und Datenblöcke DA1,DA2,DA12 zu einem einzigen freien Speicherblock FS zusammengefasst.

Der Vorteil gemäß der Erfindung liegt darin, dass innerhalb eines Speicherbereich SDF,SDF' ein Dateiverwaltungsprogramm DV die Aufgabe der Ablage von Lesedateien D und ggf. Dienstprogrammen DP des Betriebssystem BS durchführt. Der Entwickler wird von dieser sonst manuell und damit fehlerbehafteten Tätigkeit des Aktualisierungsvorgangs entlastet. Weiterhin kann der Entwickler dateiorientiert Änderungen durchführen, ohne auf die Adressbezüge von Applikationen A1,A2 oder Daten DA1,DA2,DA12 untereinander Rücksicht zu nehmen. Dieses Verfahren erlaubt darüber hinaus vorteilhaft eine Ersparnis von Entwicklungszeit bei der Gesamterstellung der Applikationen A1,A2 und Daten DA1,DA2,DA12 sowie bei Änderungen derselben.

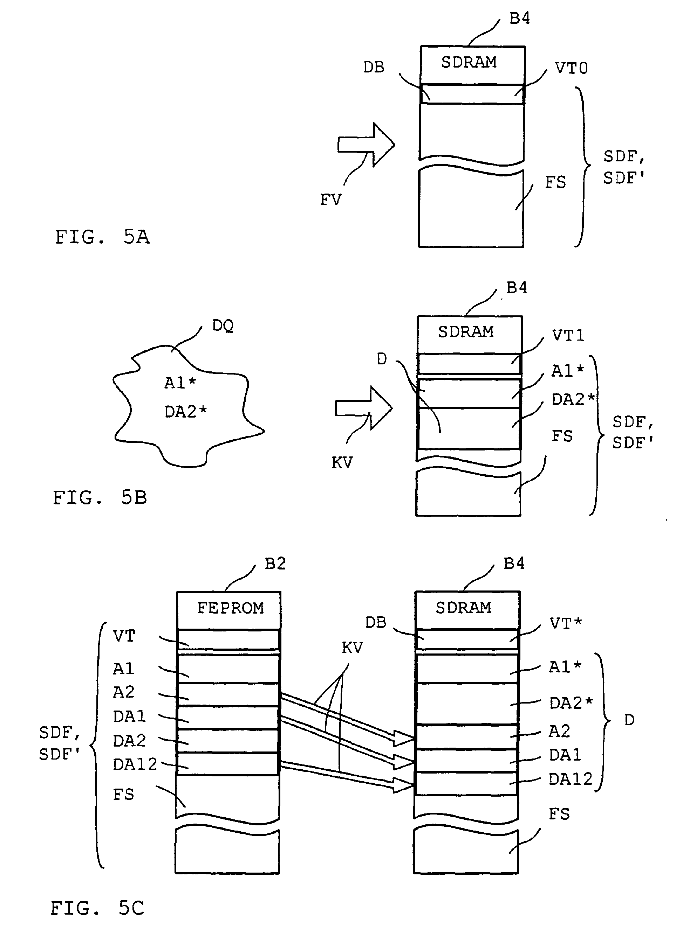

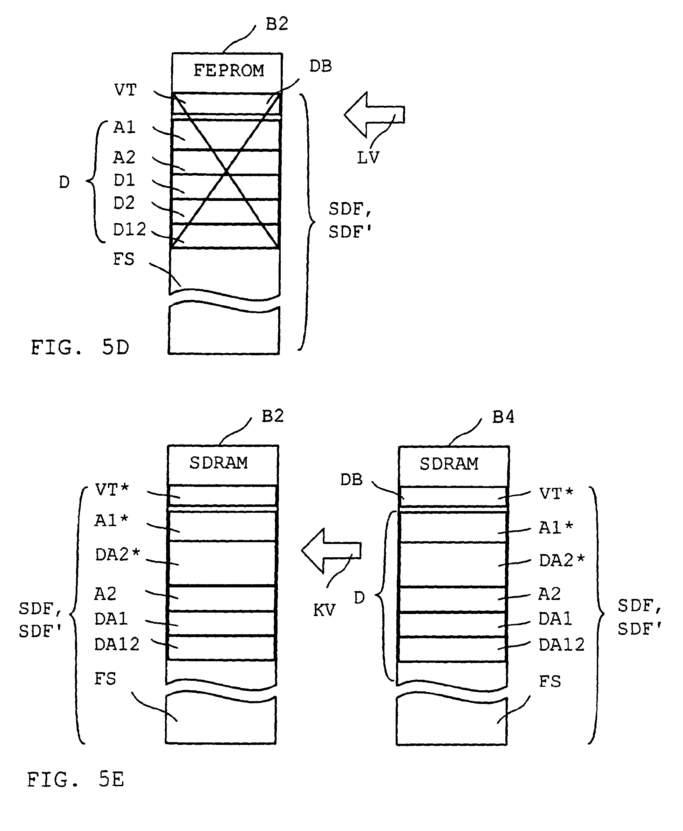

FIG 5A-E zeigt zur Veranschaulichung ein Beispiel für einen Aktualisierungsvorgang in einzelnen Schritten gemäß der Erfindung. Dabei wird im ersten Schritt gemäß FIG 5A durch einen Formatiervorgang FV ein Speicherbereich SDF*,SDF' im RAM-Speicher B4 zur Ablage strukturiert. Dabei wird eine erste Dateiverknüpfungs-Tabelle VT0 erstellt, die einen freien Speicher FS zur vollen Verfügbarkeit angibt. In der folgenden FIG 5B werden die aktualisierten Lesedateien A1*,DA2* durch einen Kopiervorgang KV im RAM-Speicher B4 abgelegt. Dabei wird eine zweite Dateiverknüpfungs-Tabelle VT1 generiert, die eine Teilbelegung des Speicherbereichs SDF,SDF' im RAM-Speicher B4 angibt. In einem dritten Schritt werden gemäß FIG 5C die nicht im Speicherbereich SDF,SDF' des RAM-Speichers B4 enthaltenen Lesedateien D aus dem ersten Speicher B2 in den RAM-Speicher B4 zur dortigen Ablage kopiert. Im Beispiel der FIG 5C bedeutet dies, dass die ursprünglichen Speicherblöcke BL der Applikation A1 und der Daten DA2 nicht kopiert werden. Daraus resultiert eine weitere modifizierte Dateiverknüpfungs-Tabelle VT*, in welcher die übertragenen Lesedateien D eingetragen sind. In einem vierten Schritt wird gemäß dem Beispiel in FIG 5D der gesamte Speicherbereich SDF,SDF' im ersten Speicher B2 gelöscht. Wie bereits erläutert, ist es möglich, dass auch nur Teile des Speicherbereichs SDF,SDF' durch einen Löschvorgang LV gelöscht werden können. Weiterhin kann dieser Löschvorgang LV z.B. bei FRAM-Bausteinen B2 entfallen. In einem letzten Schritt wird im Beispiel der FIG 5E der Speicherbereich SDF,SDF' im RAM-Speicher B4 komplett in den ersten Speicher B2 kopiert.

Die strukturierte Ablage der Speicherblöcke BL der jeweiligen Applikationen A1,A2,A1* und Daten DA1,DA2,DA2*,DA12 erfolgt nach folgenden zwei Optimierungsgesichtspunkten. Zum einem wird bei Aktualisierung die Anzahl der zu löschenden und wiederzubeschreibenden Speicherblöcke BL im Speicher B2 auf ein Minimum begrenzt. Dadurch werden die notwendigen Lösch- und Schreibzeiten so kurz wie möglich gehalten. Zum anderem erfolgt die Ablage so, dass die neuen Lesedateien D gemäß ihrer jeweiligen Speichergröße in einen entsprechenden frei werdenden Speicherblock BL übertragen werden. Dies kann nach mehreren Aktualisierungsvorgängen zu folgendem führen. Im Vergleich zur Speicheraufteilung im Beispiel der FIG 2 liegt nun keine offensichtliche geordnete Ablage der Speicherblöcke BL Applikationen A1,A2 und Daten DA1,DA2,DA12 vor. Dafür wird vorteilhaft ein für jegliche Erweiterung großer und zusammenhängender freier Speicherblock geschaffen. Für den Entwickler ist die "ungeordnete" Ablage jedoch unerheblich, da die Aufteilung des strukturierten Speicherbereichs diesem z.B. in Form eines Inhaltsverzeichnisses übermittelt wird.

Erfindungsgemäß kann weiterhin eine Dateiverknüpfungs-Tabelle VT,VT*,VT0,VT1 für die Verwaltung und Verknüpfung der belegten Speichereinheiten SE innerhalb eines Speicherbereichs SDF,SDF' verwendet werden. Durch diese kann vorteilhaft in sehr einfacher und schneller Weise ein hierarchisches Dateisystem des Speicherbereichs SDF,SDF' abgebildet werden. Dieses Dateisystem gestattet dabei, dass funktionsbezogene Verzeichnisse zur Strukturierung und Übersichtlichkeit erstellt werden können.

Weiterhin vorteilhaft gemäß der Erfindung ist, dass die strukturierte Ablage der Lesedateien D in einem logischen Laufwerk z.B. in einem Laufwerk C:\ erfolgt. Dadurch ist einerseits eine vorteilhafte Verzeichnisstruktur realisierbar. Andererseits stehen auch entsprechende Befehle zum Kopieren, Löschen, Sortieren, etc. von Lesedateien D oder auch das Formatieren des logischen Laufwerks selbst zur Verfügung. Logische Laufwerke der o.g. Art, die keine rotierenden Dateiträger wie Festplatte oder Diskettenlaufwerk sind, werden dem entsprechend physikalisch zugrunde gelegten Speicher auch als RAM-Disks oder auch als FLASH-Disks bezeichnet.

## Patentansprüche

1. Verfahren zur Aktualisierung von Lesedateien (D), die mindestens in einem Speicherbereich (SDF,SDF') eines ersten Speichers (B2) abgelegt sind, wobei
a) zumindest ein zweiter Speicher (B4) zur Ablage von Lesedateien (D) strukturiert wird und
b) neue Lesedateien (D) aus einer Datenquelle (DQ) in den zweiten Speicher (B4) abgelegt werden,
**dadurch gekennzeichnet, dass**
c) durch einen Abgleich der neuen Lesedateien (D) im zweiten Speicher (B4) mit den Lesedateien (D) des ersten Speichers (B2) die im ersten Speicher (B2) enthaltenen Lesedateien (D) ausgewählt werden, die keine entsprechende aktualisierte neue Lesedatei im zweiten Speicher (B4) aufweisen,
d) die ausgewählten Lesedateien (D) durch Kopieren vom ersten in den zweiten Speicher (B2;B4) abgelegt werden, und
e) die im zweiten Speicher (B4) abgelegten Lesedateien (D) komplett in zumindest einen Teil des Speicherbereichs (SDF,SDF') des ersten Speichers (B2) kopiert werden.

2. Industrielle Steuereinrichtung (IS), mit
a) zumindest einem ersten Speicher (B2) für Lesedateien (D), die in einem Speicherbereich (SDF, SDF') abgelegt sind,
b) zumindest einem zweiten Speicher (B4) für Lesedateien (D),
c) zumindest einer Schnittstelle (S3-S7) zur Verbindung mit einer Datenquelle (DQ) von Lesedateien (D), und
d) einer Datenverarbeitungseinheit (C) mit Mitteln
d1) zur Vorbereitung für eine strukturierte Ablage von Lesedateien (D) im zweiten Speicher (B4) und
d2) zur Ablage von neuen Lesedateien (D) aus der Datenquelle (DQ) in den zweiten Speicher (B4),
**dadurch gekennzeichnet, dass** die Datenverarbeitungseinheit (C) ferner Mittel
d3) zum Abgleich der neuen Lesedateien (D) im zweiten Speicher (B4) mit Lesedateien (D) in einem Speicherbereich (SDF,SDF') des ersten Speichers (B2),
d4) zum Kopieren der im ersten Speicher (B2) enthaltenen Lesedateien (D), die keine entsprechende aktualisierte neue Lesedatei im zweiten Speicher (B4) aufweisen, vom ersten in den zweiten Speicher (B2;B4) und
d5) zum Kopieren der kompletten Lesedateien (D) im zweiten Speicher (B4) in zumindest einen Teil des Speicherbereichs (SDF,SDF') im ersten Speichers (B2) aufweist.

3. Industrielle Steuereinrichtung (IS) nach Anspruch 2, wobei der erste Speicher (B2) ein FLASH-Speicher ist.

4. Industrielle Steuereinrichtung (IS) nach Anspruch 2, wobei der erste Speicher (B2) ein EEPROM-Speicher ist.

5. Industrielle Steuereinrichtung (IS) nach Anspruch 2, wobei der erste Speicher (B2) ein FRAM-Speicher ist.

6. Industrielle Steuereinrichtung (IS) nach Anspruch 2, wobei der zweite Speicher (B4) ein RAM-Speicher ist.

7. Industrielle Steuereinrichtung (IS) nach einem der vorangegangenen Ansprüche 2 bis 6, wobei als Mittel zur strukturierten Ablage von Lesedateien (D) ein Dateiverwaltungsprogramm (DV) eingesetzt wird.

8. Industrielle Steuereinrichtung (IS) nach einem der vorangegangenen Ansprüche 2 bis 7, wobei als Mittel zur strukturierten Ablage von Lesedateien (D) je eine Dateiverknüpfungstabelle (VT,VT0,VT1,VT*) zur Verknüpfung der benötigten Speichereinheiten (SE) für die Lesedateien (D) im ersten und zweiten Speicher (B2;B4) eingesetzt wird.

9. Industrielle Steuereinrichtung (IS) nach einem der vorangegangenen Ansprüche 2 bis 8, wobei als Mittel zur strukturierten Ablage der Lesedateien (D) ein hierarchisch strukturiertes Dateisystem eingesetzt wird.

10. Industrielle Steuereinrichtung (IS) nach einem der vorangegangenen Ansprüche 2 bis 9, wobei als Mittel zur strukturierten Ablage von Lesedateien (D) ein logisches Laufwerk eingesetzt wird.

## Claims

1. Method for updating read files (D) which are stored in at least one memory area (SDF,SDF') of a first memory (B2), wherein
a) at least one second memory (B4) is structured for the purpose of storing read files (D) and
b) new read files (D) from a data source (DQ) are stored in the second memory (B4),
**characterised in that**
c) by means of a synchronisation of the new read files (D) in the second memory (B4) with the read files (D) of the first memory (B2), the read files (D) contained in the first memory (B2) which have no corresponding updated new read file in the second memory (B4) are selected,
d) the selected read files (D) are stored by copying from the first into the second memory (B2;B4) and
e) the read files (D) stored in the second memory (B4) are copied in their entirety into at least one part of the memory area (SDF,SDF') of the first memory (B2).

2. Industrial controller (IS), comprising
a) at least one first memory (B2) for read files (D) which are stored in a memory area (SDF,SDF'),
b) at least one second memory (B4) for read files (D),
c) at least one interface (S3-S7) for connecting to a data source (DQ) of read files (D), and
d) a data processing unit (C) having means
d1) for preparing for a structured storage of read files (D) in the second memory (B4) and
d2) for storing new read files (D) from the data source (DQ) in the second memory (B4),
**characterised in that** the data processing unit (C) also has means
d3) for synchronising the new read files (D) in the second memory (B4) with read files (D) in a memory area (SDF, SDF') of the first memory (B2),
d4) for copying the read files (D) contained in the first memory (B2) which have no corresponding updated new read file in the second memory (B4) from the first into the second memory (B2;B4) and
d5) for copying the entire read files (D) in the second memory (B4) into at least one part of the memory area (SDF,SDF') in the first memory (B2).

3. Industrial controller (IS) according to claim 2, wherein the first memory (B2) is a FLASH memory.

4. Industrial controller (IS) according to claim 2, wherein the first memory (B2) is an EEPROM memory.

5. Industrial controller (IS) according to claim 2, wherein the first memory (B2) is an FRAM memory.

6. Industrial controller (IS) according to claim 2, wherein the second memory (B4) is a RAM memory.

7. Industrial controller (IS) according to one of the preceding claims 2 to 6, wherein a file management program (DV) is used as a means for the structured storage of read files (D).

8. Industrial controller (IS) according to one of the preceding claims 2 to 7, wherein a file linkage table (VT, VT0, VT1, VT*) for linking the required memory units (SE) for the read files (D) is used in each case as a means for the structured storage of read files (D) in the first and second memory (B2;B4).

9. Industrial controller (IS) according to one of the preceding claims 2 to 8, wherein a hierarchically structured file system is used as a means for the structured storage of the read files (D).

10. Industrial controller (IS) according to one of the preceding claims 2 to 9, wherein a logical drive is used as a means for the structured storage of read files (D).

## Revendications

1. Procédé de mise à jour de fichiers de lecture (D) qui sont archivés au moins dans une zone (SDF, SDF') d'une première mémoire (B2),
a) au moins une deuxième mémoire (B4) étant structurée pour l'archivage de fichiers de lecture (D) et
b) de nouveaux fichiers de lecture (D) en provenance d'une source de données (DQ) étant archivés dans la deuxième mémoire (B4),
**caractérisée en ce que**
c) par un rapprochement des nouveaux fichiers de lecture (D) dans la deuxième mémoire (B4) avec les fichiers de lecture (D) de la première mémoire (B2), on sélectionne les fichiers de lecture (D) contenus dans la première mémoire (B2) qui n'ont pas de nouveau fichier de lecture actualisé correspondant dans la deuxième mémoire (B4) ,
d) on archive les fichiers de lecture (D) sélectionnés par copiage depuis la première mémoire dans la deuxième mémoire (B2 ; B4) et
e) les fichiers de lecture (D) archivés dans la deuxième mémoire (B4) sont copiés complètement dans au moins une partie de la zone (SDF, SDF') de la première mémoire (B2).

2. Dispositif de commande industriel (IS), ayant
a) au moins une première mémoire (B2) pour des fichiers de lecture (D) qui sont archivés dans une zone de mémoire (SDF, SDF'),
b) au moins une deuxième mémoire (B4) pour des fichiers de lecture (D),
c) au moins une interface (S3-S7) pour la connexion à une source de données (DQ) de fichiers de lecture (D), et
d) une unité de traitement de données (C) ayant des moyens
d1) de préparation pour un archivage structuré de fichiers de lecture (D) dans la deuxième mémoire (B4) et
d2) pour l'archivage de nouveaux fichiers de lecture (D) en provenance de la source de données (DQ) dans la deuxième mémoire (B4),
**caractérisé en ce que** l'unité de traitement de données (C) a en outre des moyens
d3) pour le rapprochement des nouveaux fichiers de lecture (D) dans la deuxième mémoire (B4) avec des fichiers de lecture (D) dans une zone (SDF, SDF') de la première mémoire (B2),
d4) pour le copiage des fichiers de lecture (D) contenus dans la première mémoire (B2) qui n'ont pas de nouveau fichier de lecture actualisé correspondant dans la deuxième mémoire (B4) depuis la première mémoire dans la deuxième mémoire (B2; B4) et
d5) pour le copiage des fichiers de lecture (D) complets dans la deuxième mémoire (B4) dans au moins une partie de la zone (SDF, SDF') de la première mémoire (B2) .

3. Dispositif de commande industriel (IS) selon la revendication 2, la première mémoire (B2) étant une mémoire FLASH.

4. Dispositif de commande industriel (IS) selon la revendication 2, la première mémoire (B2) étant une mémoire EEPROM.

5. Dispositif de commande industriel (IS) selon la revendication 2, la première mémoire (B2) étant une mémoire FRAM.

6. Dispositif de commande industriel (IS) selon la revendication 2, la deuxième mémoire (B4) étant une mémoire RAM.

7. Dispositif de commande industriel (IS) selon une des revendications précédentes 2 à 6, un programme de gestion de fichiers (DV) étant mis en oeuvre en tant que moyen d'archivage structuré de fichiers de lecture (D).

8. Dispositif de commande industriel (IS) selon une des revendications précédentes 2 à 7, respectivement un tableau d'enchaînement de fichiers (VT, VTO, VT1, VT*) pour l'enchaînement des unités de mémoire (SE) nécessaires pour les fichiers de lecture (D) de la première mémoire et de la deuxième mémoire (B2 ; B4) étant mis en oeuvre en tant que moyen d'archivage structuré de fichiers de lecture (D).

9. Dispositif de commande industriel (IS) selon une des revendications précédentes 2 à 8, un système de fichiers structuré de façon hiérarchique étant mis en oeuvre en tant que moyen d'archivage structuré de fichiers de lecture (D).

10. Dispositif de commande industriel (IS) selon une des revendications précédentes 2 à 9, un lecteur logique étant mis en oeuvre en tant que moyen d'archivage structuré de fichiers de lecture (D).
